Europäisches Patentamt

European Patent Office

Office européen des brevets

(19)

(11) Publication number: **0 151 075**
A2

(12) # EUROPEAN PATENT APPLICATION

(21) Application number: 85400119.5

(51) Int. Cl.⁴: **F 24 F 13/00**

(22) Date of filing: 25.01.85

(30) Priority: 31.01.84 ZA 840703
25.07.84 ZA 845730

(71) Applicant: **Garcia, Rafael, 15 Campbell Street, Waverley Johannesburg (ZA)**

(43) Date of publication of application: 07.08.85
Bulletin 85/32

(72) Inventor: **Garcia, Rafael, 15 Campbell Street, Waverley Johannesburg (ZA)**

(84) Designated Contracting States: **AT BE CH DE FR GB IT LI LU NL SE**

(74) Representative: **Chameroy, Claude et al, c/o Cabinet Malemont 42, avenue du Président Wilson, F-75116 Paris (FR)**

(54) **Flange connections for ducting.**

(57) A flange connection for ducting (24) comprises elongate L-shaped members (132) for engaging the end of a duct section (24) and corner devices (20) connecting adjacent ends of the members. The members (132) have lip portions (150) which engage and secure the ends of insulation material (130) in the ducting (24). This simplifies and speeds up manufacture and allows the insulation to extend substantially continuously along the length of the ducting to minimise, at least, external condensation and possible water damage. The corner devices optionally are each composed of two elements which have interlocking formations to hold the members (132) mutually perpendicular when assembled. The corner devices (20) facilitate assembly by permitting the members (132) to be manipulated separately.

ACTORUM AG

FLANGE CONNECTIONS FOR DUCTING

FIELD OF THE INVENTION

This invention relates to air conditioning ducting and is particularly concerned with a flange connection for connecting sections of rectangular cross-section ducting. More particularly, though not exclusively,one aspect is concerned with a corner device for connecting the corners of the flanges of a section of ducting to each other and another aspect is concerned with a flange adapted to secure or hold the edges of ducting insulation material.

Ducting for distributed or central air conditioning systems in buildings is prefabricated in sections, conveyed to the installation site and then connected. In order to connect the sections to one another flange connections are used, the flange connection simply being bolted, at the corners, to each other. Clamps intermediate the corners may also be used on ducting of large cross-sections. Conventionally ducting systems are divided into three different types, namely low, medium and high pressure types. Thermal and/or noise insulation, usually a fibreglass mat, may be used with these systems. With low pressure systems the insulation is usually provided internally, while with medium and high pressure systems the insulation is provided externally because the high velocities used with such systems tends to break up the insulation material, particularly at the edges where the flange connections are provided.

DESCRIPTION OF PRIOR ART

An example of this type of ducting is shown in South African Patent 74/0484 which is concerned with a flange connection for rectangular air conditioning ducts and discloses an elbow-member for interconnecting the adjacent edges of flange members. In practice with this type of flange connection, a rectangular flange is formed by connecting four elongate flange members to each other using the corner elbows.    For this purpose the flange members are each substantially L-shaped in cross-section, which is of double thickness, formed from bent sheet metal or strip to form a "closed" and an "open" arm of the L.    The closed arm is dimensioned to receive an arm of the elbow, while the open arm of the L is adapted to be fitted over an edge of a wall of a duct and then be secured to the duct by welding or riveting.    The rectangular flange connection is fitted on to the duct end and then secured in place.    A problem with this existing system is that of fitting the flange connection to the duct, because of variations in dimensions and non-perpendicularity of the walls of the ducting.    Accordingly considerable skill, time and expense is required for this fitting as much adjustment and alignment is required.    Another problem which is not resolved by the prior art is that of spaces between the insulation at the duct ends.    Conventionally insulation terminates short of the duct end.    These spaces allow heat transfer from the duct walls in a circumferential band resulting in condensation and water droplets on the outside of the ducting which may cause damage depending on where the water falls.

This invention seeks to ameliorate the abovementioned problems in a reasonably satisfactory manner.

SUMMARY OF THE INVENTION:
According to one aspect of the invention there is provided a method of forming a flange connection at the end of a section of ducting provided with insulation material, including the steps of engaging L-shaped elongate flange members with the ducting section, interconnecting adjacent ends of the flange members with corner devices, and engaging a lip portion of each of the flange members with the insulation material to secure an end region of the insulation material.

Preferably the corner elements are used to interconnect the flange members after the flange members have been fitted to the duct walls. This is not essential, however.

Preferably the insulation material is engaged and secured to the ducting section substantially simultaneously with the engagement of the flange member with the ducting section.  The insulation material may be secured after the engagement of the flange members with the ducting by subsequently bending the lip portions to a securing position.

The insulation material may be applied internally or externally of the ducting.  Preferably the insulation extends substantially to the ends of the duct walls.

The flange connection may remain "flexible", i.e. can parallelogram to a non-square relationship, or may be "fixed" by securing the corner elements to each other at each corner by welding, riveting, etc, or preferably, by interfitting them so that inter-locking or inter-engaging formations on the corner elements engage one another.

According to another aspect of the invention there is provided a flange connection for a section of rectangular ducting comprising a plurality of elongate flange members each of which is engageable with an end region of the ducting section and corner devices for interconnecting adjacent ends of the flange members, each of the flange members having an elongate lip portion positioned to engage and secure, in use, an end region of an insulation material provided for insulating the ducting.

In a preferred embodiment the flange member is of hollow section formed of doubled sheet material with one of the arms being closed at its outer end and the other being open to receive an end region of a duct wall, the longitudinal lip portion being provided on the open arm.  Preferably the lip portion forms a channel for receiving an edge region of the insulation material.  Preferably the lip portion particularly the base thereof is positioned such that in use the end of the insulation material will be substantially flush with the end of the ducting connection whereby, when the duct sections are connected the insulation is substantially continuous along the ducting.

The lip portion may be inside or outside the "L" depending on whether internal or external insulation is used.

According to yet another aspect of the invention there is provided a corner device for interconnecting adjacent ends of elongate flange members to form a ducting flange connection comprising a pair of corner elements each having a shank portion for engagement with a flange member and a connecting portion for engaging the other corner element in a predetermined angular relationship by means of formations on at least one corner element which engage a portion of the other element of the pair.

Preferably at least one of the corner elements is formed with a stepped region whereby when the corner elements are engaged to form the corner device, the corner device has a substantially planar face.    In use, the planar face faces away from the ducting to which the flange connection is secured so that when adjacent ducting sections are connected, the planar faces face towards each other and a seal can be formed therebetween. Preferably the interlocking formation comprise on at least one and preferably on both of the corner elements of a corner device, a stepped formation at an intermediate position along the length of the strip.   The stepped formation may be continuous or may be one or more separate tabs.   A lip at the end of the strip remote from the flange member in use may be provided to form a wall against which an edge of the other corner element can abut. The lip and stepped formation may form a rectangular depression into which a part of the other corner element is snuggly received.

The flange connection of the invention simplifies the manufacture of ducting sections by facilitating the securing of the end regions of the insulation to the ducting simultaneously with the fitting of the flange members.    This avoids what up to now has been a two step operation. Also the flange member now permits the insulation to extend to the end of each ducting section in a simple inexpensive manner.   The corner device allows flexibility for manipulating the flange connections during fitting to the ducting sections.

According to yet another aspect of the invention there is provided ducting comprising ducting sections and inventive flange connections as set out above connecting desired adjacent ducting sections. Preferably sealing or gasket material is provided between abutting flange connections. Clamps may also be provided to secure abutting flange connections to each other intermediate the corners of the flange the connections.

BRIEF DESCRIPTION OF THE DRAWINGS

Embodiments of the invention are described below to illustrate the invention, the description being made with reference to the accompanying drawings, in which:

Figure 1 shows a portion of an air conditioning duct having two duct sections joined by a flange connection of the invention;

Figure 2 shows a section through a portion of a duct section fitted with one embodiment of flange member of the invention;

Figure 2a shows, on enlarged scale, detail III of Figure 2;

Figure 3 shows a section through a variant of flange member on a duct section;

Figure 4 shows a section similar to that of Figure 2 of a variant of flange member of the invention;

Figure 5 shows part of a section through a pair of coupled duct sections and a clamp member;

Figure 6 shows a side view of the clamp member of Figure 5;

Figure 7 shows a variant of clamp member;

Figure 8 shows an end view of part of a duct section fitted with a flange connection of the invention;

Figure 9 shows an exploded view of a corner device of the invention with Figures 9a and 9b being sections along A-A and B-B of Figure 9; and

Figures 10 and 11 show views similar to those of Figures 8 and 9, but of a variant of corner device of the invention.

DESCRIPTION OF PREFERRED EMBODIMENTS

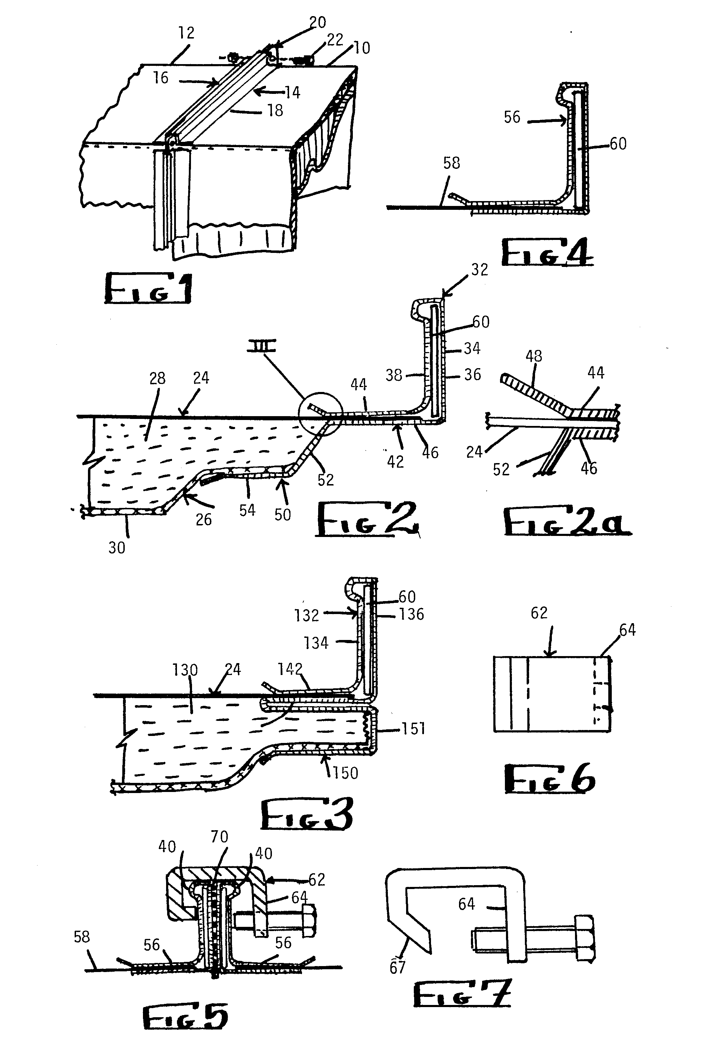

Referring to the drawings, Figure 1 shows a portion of a ducting system for air conditioning having duct sections 10 and 12 each of which has a rectangular flange connection 14 and 16 respectively, whereby they are connected to each other.

- 6 -    0151075

Each flange connection 14, 16 comprises elongate L-shaped flange members 18 and corner devices 20 with the flange connections being secured to each other by nuts and bolts 22 passing through registering holes in the corner devices 20.

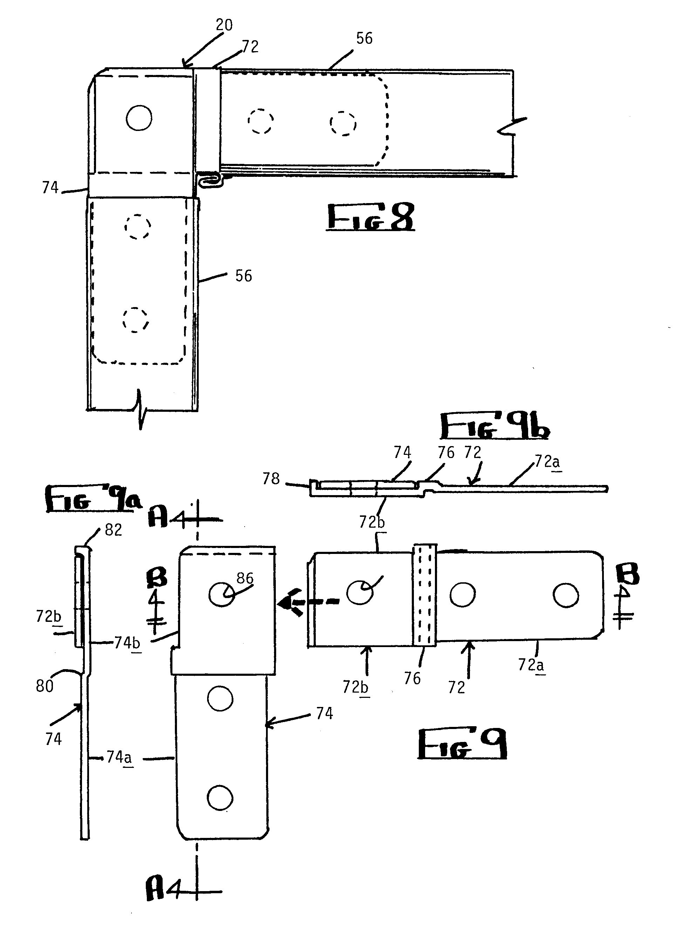

Figures 2 and 2a show a duct wall 24 having internal insulation 26, the insulation being adhered to the wall and comprising a fibre glass mat 28 having a woven fibre-glass cover 30. An L-shaped flange member 32 formed of double and bent sheet metal strip is secured to the wall 24. The flange member 32 comprises a closed arm 34 with substantially parallel walls 36 and 38, the wall 38 having a lip 40 projecting backwards from the flange over the duct wall 24, and an open arm 42 which receives the end of the duct wall 24. Arm 42 has a wall 44 with an angled edge portion 48 to facilitate insertion of the duct wall 24 between the wall 44, and a second wall 46 of the arm 42. Wall 46 has a longitudinal lip 50 which extends upwardly and away from the wall 46 and over the insulation 26 to hold the end of the insulation. The lip 50 has an inclined portion 52 and a portion 54 which is substantially parallel to the arm 42 and the duct wall 24.

In use, the flange member 32 is fitted to the wall 24 by first engaging an edge portion of the arm with the wall 24, the lip 50 extending over the insulation, and then rotating the member 32 into position at the same time as pushing it more firmly on to the wall 24 thereby to hold down the insulation. When the member 32 is in position it is spot-welded or riveted to the wall 24. In use these portions of the ducting at the flange connection which are not provided with insulation may be provided with encircling insulating strips.

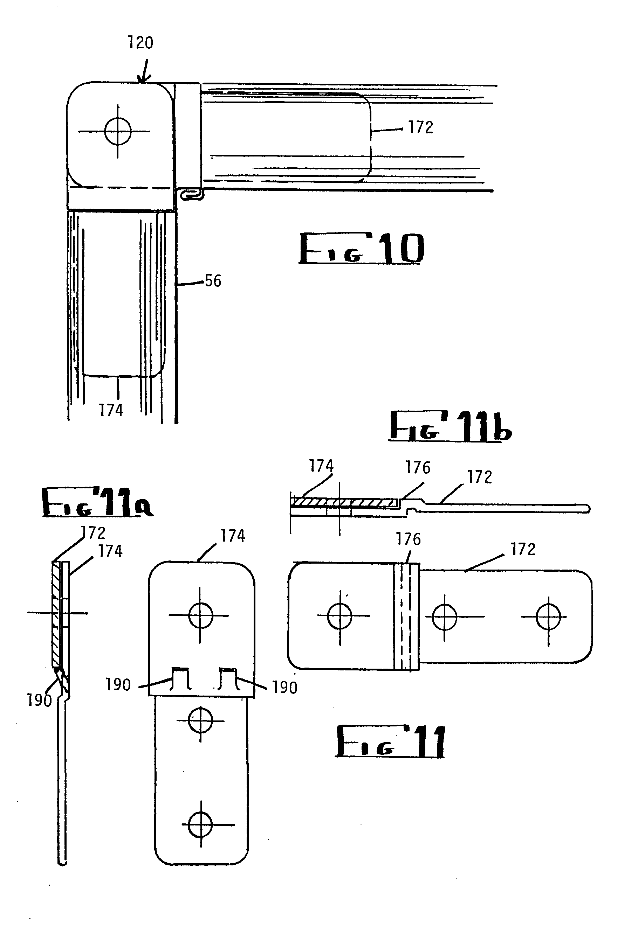

Figure 3 shows a variant of the flange member of Figure 2, the same reference numerals with a prefix 1 being used for similar parts. In Figure 3 the flange member 132 has a closed arm 134 and an open arm 142 with a longitudinal lip 150 which forms a channel open to the duct section and having a back wall 151 flush with the wall 136 of the closed arm 134. The lip 150 is formed by bending the arm 146. With this embodiment the insulation 130 extends to the end of the duct section whereby in use the insulation is substantially continuous along the length of the assembled ducting.

Figure 4 shows an arrangement similar to that of Figures 2 and 3 of a flange member 56 secured to a duct wall 58.    However in this event no insulation is provided on the duct wall and the lip 50 is not present.   This flange member 56 is substantially conventional.

Also visible in Figures 2 to 4 is an end 60 of a corner element 20 for a corner device to be described more fully below.

Figures 5 and 6 show a clamp member 62 for clamping abutting flange connections intermediate the corners thereof.   The flange connection ˉ in this event include flange members 56 of the type shown in Figure 4. The clamp member is C-shaped in cross-section and has an arm 64 formed with a tapped or threaded hole which engages a bolt 66. The opening in the clamp member 62 is dimensioned to fit over the lips 40 of abutting flange members 56, the lips 40 preventing accidental removal of the clamp 62 prior to tightening of the bolt 66.   Also visible in Figure 5 is a strip of sealing material such as a neoprene sandwich rubber gasket 70.

Figure 7 shows a clamp member in which  a  curved portion 67 of the member remote from the arm 64 is sloped rather than perpendicular to the arm 64.

Figure 8 shows a portion of ducting using flange members 56 of the type shown in Figure 4.   The flange members 56 are connected to each other and held at right angles by means of a corner device 20 comprising interfitting corner elements 72 and 74.   Each of the corner elements 72,74 is substantially elongate and has a portion 72a and 74a, respectively, inside the closed arm of a flange member 56.

Figure 9 shows the corner device 20 in greater detail.   The corner element 72 has a shank portion 72a which fits snuggly in the flange member 56 and a connecting portion 72b which is formed to interengage a portion of the element 74.   The element 74 has similar portions 74a and 74b.

Between the portion 72a and 72b there is a lateral rib 76 having an upper level (in Figure 9b) which is spaced from the general plane of the portion 72a by the thickness of the material of the flange member 56. There is a step from the rib 76 to the general plane of the portion 72a, the step having a height equal to the thickness of the material of the element 74, as shown. At the free end of the portion 72a there is an upstanding lip 78. The spacing between the shoulders of the lip 78 and rib 76 is sufficiently wide to accommodate the portion 74b of the other element with a snug fit. Element 74 has an intermediate stepped portion 80 to accommodate the thickness of the flange member material and a lip 82. Each of the elements 72 and 74 has a hole 84 and 86, respectively.

When the elements 72 and 74 are fitted into flange members 56 and fitted together to form a corner device 20, then the holes 84 and 86 are in register while the connecting portions 72b and 74b are interfitted and interlocked with each other so that the elements are perpendicular while the outer surface of the flange connection, i.e. that surface facing away from the duct section to which the flange connection is connected, is substantially planar and flush with the flange member.

In practice, ducting made using the embodiments described above is fabricated and installed as follows.

First, a length of duct section is made up by bending metal sheeting into a rectangular form and rolling the joints between one or more adjacent corners closed, for example as shown in Figure 8. An internal lining may be provided in the ducting as required. Second, corner elements are fitted into the closed arm of an appropriate flange member 32, 132 or 56, an element 72 being at one end and an element 74 at the other end. Third, the flange members are fitted to the ends of the duct section walls and pushed into their final intended position with the elements 72 and 74 at the respective corners interengaging. In contrast to the prior art methods this step may be performed quickly and easily by a single operator. The final step of the formation of the flange connection on the duct section is that of securing the flange connection to the duct by welding, riveting and the like. If required a sealant such as an appropriate silicone sealant or a folded strip of an appropriate rubber or elastomer may be provided between the duct wall and the inside faces of the open arm portions of the flange member.

The duct sections are then conveyed to the installation site where they are joined together by clamping the flange connections to each other using bolts 22 and, if required, clamps 62 as described above. If required, a sealant, such as a liquid silicone sealant or a rubber strip or self-adhesive foamed neoprene strip may be provided between the mating flange connections. Further suitable sealing material such as bitumen and silicone sealer may be provided to seal any gaps at the corners between the flange members, corner device 20 and duct walls 24.

Figures 10 and 11 use the same reference numbers as those of Figure 8 and 9, but with the prefix 1. Referring to Figures 10 and 11, the corner elements 172 and 174 are modified in that, respectively, there is no lip 78 and 82 and each element is symmetrical about its longitudinal axis. Element 174 has two tabs 190 pressed out of it adjacent the step 180 and positioned to abut an edge of the element 172. These tabs 190 in combination with the rib 176 ensure the corner elements, when engaged, are perpendicular. The elements 172 and 174 have all of their corners radiussed. At the ends which are inserted into the flange member this radiussing facilitates insertion. At the exposed ends in use, this radiussing ensures the outside corner of each flange connection is rounded for safety to workers. Finally the radiussing of the exposed ends provides flexibility and ease of installation in that either element 172 and 174 may be inserted at any position and at any orientation provided the mating element is appropriately orientated.

In use, a flange connection is formed using the devices of Figures 10 and 11 by making up pairs of flange members with elements 172 at each end, and pairs with elements 174. Similar flange members are fitted to opposing duct walls and then the remaining flange members are fitted to the other duct walls. Hence the exposed portions of the elements 172 and 174 ultimately have edges engaging the tabs 190

0151075

and rib 176, respectively, to hold adjacent flange members mutually perpendicular.   Sealing material may be provided where required.

It is to be understood that the invention is not limited to the precise constructional details of the embodiments shown in the drawings and described herein and modifications may be made without departing from the spirit of the invention.   For example the insulation as shown in Figures 2 and 3 may be provided on the outside of the ducting, in which event the lip 50 and 150 respectively would similarly be provided on the outside of the ducting.   Also, while it is preferred to first fit the flange members to the ducting, this is not essential; a rectangular flange connection may first be formed with the corner devices (of the invention or prior art corner devices) in position and then the whole flange connection fitted to the ducting.   In these events the insulation material may be pushed under or into the lip portions using a suitable tool.   Alternatively the lip member may initially be open to fit over the insulation and then be bent to a closed position.

- 11 -                    0151075

CLAIMS

1. A method of forming a flange connection at the end of a section of
   ducting provided with insulation material, including the steps of
   engaging L-shaped elongate flange members (32, 132) with the
   ducting section, and interconnecting adjacent ends of the flange
   members with corner devices (20, 120), characterized by engaging a
   lip portion (50, 150) of each of the flange members with the
   insulation material (28, 130) to secure an end region of the
   insulation material.

2. A method as claimed in claim 1, characterized by the flange members
   (32, 132) being interconnected by the corner devices (20, 120) after
   the flange members have been engaged with the ducting.

3. A method as claimed in either of claims 1 or 2, characterized by the
   insulation material being engaged substantially simultaneously with
   the engagement of the flange member with the ducting.

4. A flange connection for a section of rectangular ducting comprising
   a plurality of elongate flange members each of which is engageable with
   an end region of the ducting section and corner devices for
   interconnecting adjacent ends of the flange members, characterized
   in that each of the flange members (32, 132) has an elongate lip
   portion (50, 150) positioned to engage and secure, in use, an end
   of an insulation material (28, 130) provided for insulating the
   ducting.

5. A flange connection as claimed in claim 4, wherein each flange member
   is substantially L-shaped in cross-section and is of hollow section
   open on one side for engaging the ducting section, characterized in
   that the lip portion (50, 150) extends outwardly from the open arm
   (42, 142).

6. A flange connection as claimed in either of claims 4 or 5, characterized
   in that the lip portion (150) forms a channel for receiving an end
   region of the insulation material (150).

0151075

7. A flange connection as claimed in claim 4, characterized in that the base (150) of the channel is substantially flush with the exposed end (136), in use, of the flange member (132).

8. A flange connection as claimed in any of claims 4 to 7, characterized in that the lip portion (50,150) is formed from the material of the flange member (32, 132).

9. A flange connection as claimed in any of claims 4 to 8, characterized in that each corner device (20, 120) comprises two corner elements (72 and 74, 172 and 174) each having a shank portion (72a, 74a) for engagement with a flange member and a connecting portion (72b, 74b) for engagement with the other corner element, at least one of the corner elements having formations (76, 78, 82, 176, 190) so that the elements engage in a predetermined angular relationship.

10. A flange connection as claimed in claim 9, characterized in that at least one of the corner elements (72, 172) has a stepped region (76, 176) whereby when a pair of the corner elements are engaged to form a corner device, the corner device has a substantially planar face (Fig 9b and Fig 11b).

11. A flange connection as claimed in either of claims 9 or 10, characterized in that           at least one of the corner elements (72, 74) has a lip (78, 82) at the end of the shank portion to form a wall against which a portion of the other element can abut thereby to locate the corner elements relatively to each other.

12. A flange connection as claimed in any of claims 9 to 11, characterized in that each corner element has radiussed corners (Figs. 9 and 11).

FIG 1

FIG 4

FIG 2

FIG 2a

FIG 3

FIG 6

FIG 5

FIG 7

Fig 8

Fig 9b

Fig 9a

Fig 9

0151075

120

172

**Fig 10**

56

174

**Fig 11b**

174    176    172

**Fig 11a**

172
174

190

174

190    190

176    172

**Fig 11**